# EUROPÄISCHE PATENTSCHRIFT

(11) **EP 1 236 942 B1**
(45) Veröffentlichungstag und Bekanntmachung des Hinweises auf die Patenterteilung: **04.05.2005**
(21) Anmeldenummer: 02001634.1
(22) Anmeldetag: 24.01.2002
(51) Int. Cl.: F16L 5/04, F16L 59/02

(54) **Abschottung einer Gebäudewandungsdurchdringung**
Isolation of a wall penetration
Isolation d'une perçée murale

(30) Priorität: 21.02.2001 DE 20103110 U
(43) Veröffentlichungstag der Anmeldung: 04.09.2002
(73) Patentinhaber: Deutsche Rockwool Mineralwoll GmbH & Co. OHG, 45966 Gladbeck (DE)
(72) Erfinder: Schwark, Martin, 46242 Bottrop (DE)
(74) Vertreter: Wanischeck-Bergmann, Axel

(56) Entgegenhaltungen:
- WO-A-00/52278
- DE-A- 19 905 103
- DE-U- 9 204 217
- GB-A- 2 241 546

## Beschreibung

Die Erfindung betrifft eine Abschottung für eine Durchgangsöffnung in einer in im wesentlichen senkrechter oder horizontaler Ausrichtung angeordneten Gebäudewandung, wobei die Durchgangsöffnung zumindest eine Laibung ausbildet und für die Durchführung zumindest einer Leitung für Energie- und/oder Informationsleiter vorgesehen ist, mit einer die Leitung zumindest im Bereich der Durchgangsöffnung ummantelnden, als Rohrschale aus Mineralfasern ausgebildeten Manschette.

Aus dem Stand der Technik sind bereits diverse Abschottungen einer Gebäudewandung bekannt. So offenbart beispielsweise die DE 199 05 103 A1 eine Vorrichtung zur abdichtenden Einfassung von Rohr- und/Leitungssträngen in einer Mauer- und/oder Decken- bzw. Bodenöffnung eines Gebäudes. Diese Vorrichtung besteht aus einer den Rohr- und/oder Leitungsstrang ummantelnden Manschette, die bei Brandeinwirkung hitzeresistent und rauchdicht ist. Die Manschette ist als Rohrschale aus Mineralfasern ausgebildet, wobei die Rohrschale in Achsrichtung und in Radialrichtung flexibel ist und in ein die Mauer- und/oder Decken- bzw. Bodenöffnung verschließendes Schott eingesetzt ist, welches an der Mantelfläche der Manschette anschließt. Eine derartige Vorrichtung hat sich für die in dieser Druckschrift dargestellten Zwecke bewährt. Es hat sich allerdings als aufwendig gezeigt, dass der Bereich zwischen der Rohrschale und der Laibung der Wandung im Bereich der Öffnung gegebenenfalls durch aufwendige Baumaßnahmen geschlossen werden muss. Insbesondere sind hierbei Arbeitsschritte notwendig, die nicht von einem Handwerker für das Verlegen der Leitungen ausgeführt werden können. Hierdurch entstehen zwei unterschiedliche Gewerke, die zu unterschiedlichen Zeitpunkten innerhalb des Gebäudes ausgeführt werden. Der Zeitunterschied für die Ausführung der Gewerke kann hierbei dazu führen, dass Beschädigungen an der Rohrschale entstehen, die anschließend nicht mit der notwendigen Sorgfalt korrigiert werden.

Weiterhin ist aus der DE 298 04 351 U1 eine Vorrichtung zur Rohrabschottung bekannt. Diese vorbekannte Vorrichtung weist eine Schicht aus hitzebeständigem Material sowie wenigstens eine das Rohr umgebende Schicht zum Schallschutz auf. Hierbei handelt es sich um eine Schicht aus kunstharzgebundener Steinwolle, die in einer Mörtelfüllung innerhalb der Gebäudeöffnung angeordnet ist. Auch bei dieser Vorrichtung ist der Einbau der beiden Schichten in zwei unterschiedlichen Gewerken auszuführen, so dass die voranstehend dargestellten Unzulänglichkeiten auch hier auftreten.

Eine weitere Abschottung ist aus der DE 92 04 217 U1 bekannt. Diese Abschottung für eine in einer brandabschnittsbegrenzenden Wand vorgesehene Durchgangsöffnung für mindestens ein die Wand durchdringendes Element, vorzugsweise für eine Kabeltrasse, besteht aus einem Feuerhemmelement, vorzugsweise einer Mineralfaserplatte, das mindestens eine Durchgangsöffnung für das die Wand durchdringende Element aufweist. Bei dieser vorbekannten Abschottung ist vorgesehen, dass das Feuerhemmelement im Bereich des Umfanges des die Wand durchdringenden Elementes verstärkt ist. Demzufolge besteht hier der Nachteil, dass der Bereich zwischen dem verstärkten Bereich und der Wand relativ schwach ausgebildet ist, so dass gegebenenfalls bei der Montage der Abschottung entstehende Beschädigungen unberücksichtigt bleiben, die bei einem späteren Brandfall dazu führen, dass die geforderte Abdichtung gegen Rauch nicht gegeben ist.

Schließlich offenbart die DE 27 26 241 A1 eine feuersichere Kabel- und Rohrdurchführung aus nichtbrennbarer gebundener Mineralfaser, wie beispielsweise Steinwolle, wobei ein Kabeldurchführungsrahmen vorgesehen ist, der beidseitig mit Mineralfasern verkleidet ist. Diese Ausgestaltung hat den Nachteil, dass auch hier eine Vielzahl von unterschiedlichen handwerklichen Arbeiten ausgeführt werden muss, die in der Regel nicht von einem Handwerker sondern in Form von mehreren Gewerken erfolgen müssen.

Ausgehend von diesem Stand der Technik liegt der Erfindung die **Aufgabe** zugrunde, eine gattungsgemäße Abschottung zu schaffen, die in einfacher und kostengünstiger Weise schnell und zuverlässig herstellbar bzw. einbaubar ist.

Die **Lösung** dieser Aufgabenstellung sieht vor, dass die Manschette unmittelbar an die Laibung der als Bohrung ausgebildeten Durchgangsöffnung anschließt und dass die Manschette die Durchgangsöffnung in radialer und axialer Richtung vollständig hitzeresistent und rauchdicht verschließt.

Somit ist erfindungsgemäß vorgesehen, dass die Durchgangsöffnung als Bohrung, beispielsweise als Kernbohrung ausgebildet ist. Eine derartige Bohrung hat einen definierten Durchmesser, der durch die Manschette mit im wesentlichen entsprechenden Außendurchmesser ausgefüllt werden kann. Die Manschette ist als Rohrschale aus Mineralfasern ausgebildet, wobei die Rohrschale in axialer und radialer Richtung eine Elastizität aufweist, so dass die Rohrschale aufgrund ihrer Elastizität in einfacher Weise derart in die Durchgangsöffnung eingesetzt werden kann, dass sich ein hitzeresistenter und rauchdichter Verschluss ausbildet. Neben einer dichten Anlage der Rohrschale bzw. Manschette an der Laibung der Durchgangsöffnung ist auch eine dichte Anlage der Rohrschale bzw. Manschette an der Leitung vorgesehen.

Die erfindungsgemäße Abschottung sieht demzufolge vor, dass eine relativ leichte Rohrschale aus Mineralfasern die Leitung umgibt. Die als Rohrschale ausgebildete Manschette der Leitung ist im Brandfall hitzeresistent und rauchdicht. Die Außenkontur der Manschette ist mit einer engen Toleranz gefertigt. Der Außendurchmesser der Manschette ist den Standarddurchmessern von Kernbohrungskronen anpassbar, so dass bei der Montage der Manschette die Manschette formschlüssig in die Kernbohrung eingebracht werden kann, ohne dass ein zusätzliches Verfüllen von Restspalten erforderlich ist. Durch die formschlüssige Anordnung der Manschette wird die Übertragung von Feuer und Rauch in andere Brandabschnitte effektiv unterbunden. Ferner besteht der Vorteil, dass die Durchgangsöffnung sofort verschlossen ist und zusätzliche Einschalungen und Verfüllungen mit Mörtel oder anderen brandsicheren Füllmaterialien nicht erforderlich sind.

Nach einem weiteren Merkmal der Erfindung ist vorgesehen, dass die Manschette eine Rohdichte zwischen 20 und 600 kg/m³, insbesondere zwischen 20 und 200 kg/m³ aufweist. Manschetten mit einer derart ausgebildeten Rohdichte können mit einer ausreichenden Elastizität hergestellt werden und bieten gleichzeitig eine notwendige Dichte, um die Hitzeresistenz und eine erforderliche Rauchabdichtung zu gewährleisten.

Insbesondere ist die Manschette form- und/oder reibschlüssig in der Durchgangsöffnung gehalten. Hierbei bildet insbesondere der Reibschluss den Vorteil, dass die erforderliche Abdichtung zwischen der Laibung und der Manschette bereits aufgrund der in diesem Bereich auftretenden Reibkräfte erzielt werden kann.

Nach einem weiteren Merkmal der Erfindung ist vorgesehen, dass die Manschette einen gegenüber dem Durchmesser der Durchgangsöffnung geringfügig größeren Außendurchmesser aufweist. Diese Ausgestaltung ist ebenfalls dahingehend von Vorteil, dass der notwendige Reibschluss und die damit gegebene Abdichtung in einfacher Weise erzielbar ist.

Die Manschette liegt vorzugsweise dichtend an der Leitung an, so dass auch in diesem Bereich zusätzliche Abdichtungsmittel nicht eingebracht werden müssen. Gegebenenfalls kann es von Vorteil sein, die Manschette mit der Leitung über eine elastische Klebverbindung zu verbinden.

Beidseitig der Durchgangsöffnung ist die Leitung vorzugsweise mit Rohrschalen wärme- und/oder schallisoliert, so dass zum einen keine Wärmeverluste in der Leitung zu verzeichnen sind und zum anderen auch Geräusche oder dergleichen, die beispielsweise aufgrund von fließendem Wasser oder dergleichen verursacht werden, nicht vollständig emittiert werden. Wird für die Wärme- und/oder Schallisolierung ebenfalls ein Mineralfasermaterial verwendet, so geht hiermit auch eine Brandsicherung der Leitungen einher, die beispielsweise dann von Vorteil ist, wenn die Leitung für die Förderung von brandempfindlichen Medien vorgesehen ist. In diesem Zusammenhang ist es von Vorteil, dass die Rohrschalen beidseitig der Durchgangsöffnung unmittelbar an die Manschette anschließen.

Im Zuge einer problemlosen Verarbeitung hat es sich als vorteilhaft erwiesen, die Manschette mit einer Länge auszubilden, die mit der Länge der Durchgangsöffnung übereinstimmt. Die Manschette verschließt damit den gesamten Bereich der Durchgangsöffnung und die Montage der sich daran anschließenden Rohrschalen ist ohne großen Aufwand hinsichtlich der Ankopplung an die Wand, beispielsweise in Form von Zuschneidearbeiten möglich.

Nach einem weiteren Merkmal ist vorgesehen, dass der Außendurchmesser der beidseitig der Durchgangsöffnung angeordneten, die Leitung isolierenden Rohrschalen größer ist als der Außendurchmesser der Manschette. Schließen diese Rohrschalen unmittelbar an die Gebäudewandung an, so ergibt sich hierdurch durch die im Durchmesser größer ausgebildeten Rohrschalen eine weitere Abdichtung der Durchgangsöffnung. Verstärkt wird dieser positive Effekt dadurch, dass die Rohrschalen beidseitig der Manschette von der Manschette unterschiedliche Rohdichten aufweisen. Beispielsweise können die Rohrschalen eine wesentlich größere Rohdichte aufweisen, als die Manschette, da es im Bereich außerhalb der Durchgangsöffnung nicht in erster Linie auf die Elastizität, sondern auf die Isolier- und Abdichtwirkung ankommt.

Für die Manschette wird vorzugsweise kunstharzgebundene Mineralwolle, beispielsweise Steinwolle und/oder Glaswolle mit einem Schmelzpunkt von zumindest 600, insbesondere 900 und vorzugsweise >1000 ° Celsius vorgesehen. Die Rohrschale kann aus Kalziumsilikat, Vermiculite, Foamglas oder Gipskarton bestehen. Für die Vereinfachung der Montage ist vorgesehen, dass die Manschette eine oder mehrere achsparallel verlaufende Trennstellen aufweist, die verschließbar, insbesondere verklebbar, vernähbar oder dergleichen sind. Darüber hinaus kann die Manschette eine Kaschierung und/oder eine dünne Folie auf ihrer Außenmantelfläche aufweisen, wobei die Kaschierung vorzugsweise aus Aluminium und/oder aus anderen Metallfolien sowie Folien aus Kunststoff ausgebildet ist. Es ist ferner vorgesehen, dass die Kaschierung und/oder die Folie eine Materialstärke < 1 mm, insbesondere von 0,5 mm aufweist. Die Wandstärke der Manschette beträgt vorzugsweise zumindest 10 mm.

Weitere Merkmale und Vorteile der Erfindung ergeben sich aus der nachfolgenden Beschreibung der zugehörigen Zeichnung, in der bevorzugte Ausführungsformen der Erfindung dargestellt sind. In der Zeichnung zeigen:
- Figur 1: eine erfindungsgemäße Ausführung einer Abschottung einer Gebäudewandung in senkrechter Ausrichtung;
- Figur 2: eine nicht im Rahmen der Erfindunggemäß den Ansprüchen liegende Ausführungsform einer Abschottung einer Gebäudewandung in horizontaler Ausrichtung und
- Figur 3: eine weitere nicht im Rahmen der Erfindunggemäß den Ansprüchen liegende Ausführungsform einer Abschottung einer Gebäudewandung in horizontaler Ausrichtung.

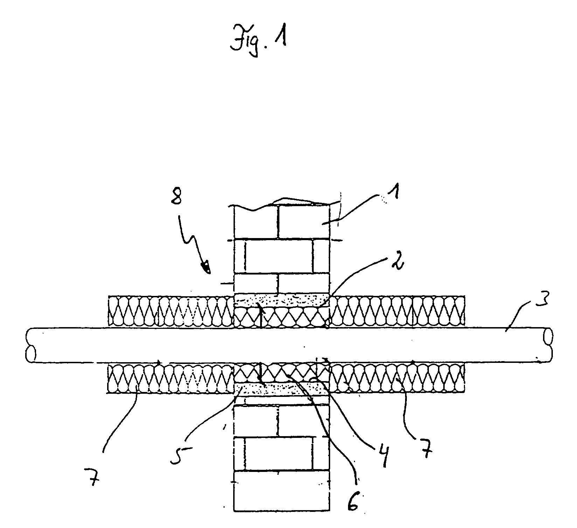

Figur 1 zeigt eine senkrecht ausgerichtete Gebäudewandung 1 mit einer als Bohrung ausgebildeten Durchgangsöffnung 2, durch die eine Leitung 3 geführt ist. Die Durchgangsöffnung 2 ist im Querschnitt rund ausgebildet und durch eine Kembohrung erstellt. Die eine Laibung 4 bildenden Flächen der Durchgangsöffnung 2 sind mit einer Mörtelschicht 5 ausgekleidet, die eine glattflächige Oberfläche bildet und die Verbindung zwischen der Gebäudewandung 1 und einer als Rohrschale ausgebildeten Manschette 6 darstellt.
Die Manschette 6 schließt unmittelbar an die Laibung 4 der Durchgangsöffnung 2 an und besteht aus gebundenen Mineralfasern, die eine Rohdichte aufweisen, welche eine Elastizität bzw. Flexibilität der Manschette 6 in ihrer axialen und radialen Richtung bereithält.

Die Manschette 6 schließt ferner flächenbündig an der Außenmantelfläche der Leitung 3 an. Somit ist in die Durchgangsöffnung 2 lediglich die Leitung 3 und die die Leitung 3 umgebende Manschette 6 eingesetzt. Die Durchgangsöffnung ist in radialer und axialer Richtung vollständig durch die Manschette 6 hitzeresistent und rauchdicht verschlossen. Die axiale Länge der Manschette 6 entspricht der Länge der Durchgangsöffnung 2, so dass die Manschette 6 oberflächenbündig mit der Gebäudewandung 1 abschließt. Beidseitig der Gebäudewandung 1 ist jeweils eine weitere Rohrschale 7 vorgesehen, die oberflächenbündig auf der Außenmantelfläche der Leitung 3 aufliegt und oberflächenbündig an die Gebäudewandung 1 und somit auch an die Stirnflächen der Manschette 6 anschließt. Die Rohrschalen 7 weisen einen Außendurchmesser auf, der im wesentlichen mit dem Durchmesser der Bohrung übereinstimmt, so dass der Außendurchmesser der Rohrschale 7 größer ist, als der Außendurchmesser der Manschette 6.

Die Rohrschalen 7 bestehen ebenfalls aus gebundenen Mineralfasern und weisen eine von der Manschette 6 abweichende, nämlich größere Rohdichte auf. Durch den stirnseitigen Anschluss der Rohrschale 7 an die Manschette 6 wird eine weitere Verbesserung der Abdichtung der Durchgangsöffnung 2 in der Gebäudewandung 1 erzielt.

Die Befestigung der Rohrschale 7 an der Leitung 3 erfolgt beispielsweise mittels eines verzinkten Wickeldrahts.

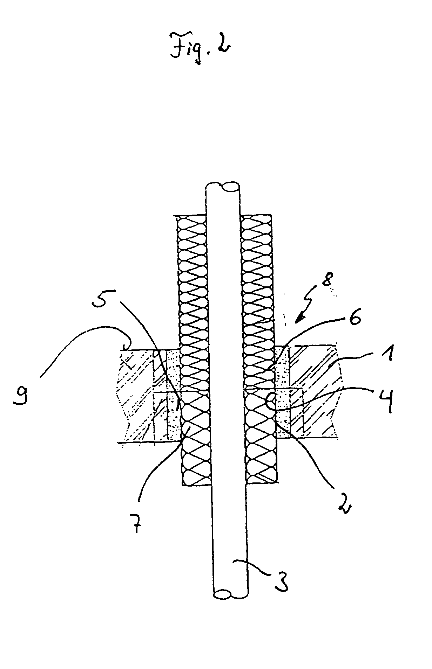

In Figur 2 ist eine Ausführungsform einer Abschottung 8 einer Gebäudewandung 1 in horizontaler Ausrichtung dargestellt.

Diese Ausführungsform unterscheidet sich darüber hinaus von der Ausführungsform gemäß Figur 1 dadurch, dass die Manschette 6 über eine Oberfläche 9 der Gebäudewandung 1 hinausragt und ungefähr bis in den Mittelbereich der Durchgangsöffnung 2 eingeschoben ist. Die zweite Hälfte der Durchgangsöffnung 2 ist mittels der Rohrschale 7 ausgefüllt, wobei beispielsweise zwischen der Rohrschale 7 und der Laibung 4 ein höherer Reibkoeffizient vorgesehen sein kann, um das Durchrutschen der Manschette 6 durch die Durchgangsöffnung 2 zu verhindern.

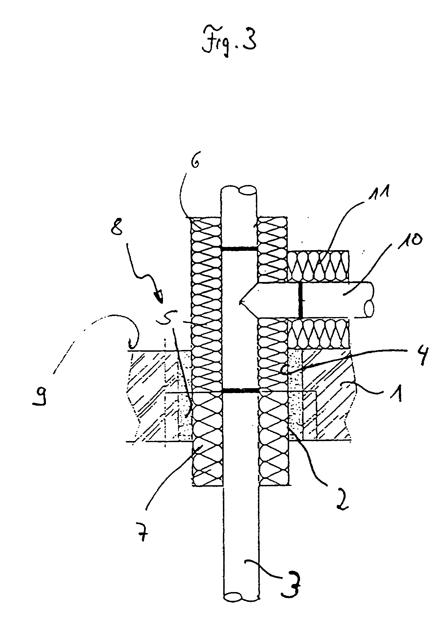

Figur 3 zeigt schließlich eine weitere Ausführungsform einer Abschottung 8, die im wesentlichen mit der Ausführungsform gemäß Figur 2 überstimmt und ergänzend eine von der Leitung 3 oberhalb der Gebäudewandung 1 abzweigende Zweigleitung 10 vorsieht, die mit einer an die Manschette 6 anschließenden Rohrschale 11 isoliert ist.

## Patentansprüche

1. Abschottung für eine Durchgangsöffnung (2) in einer in im wesentlichen senkrechter oder horizontaler Ausrichtung angeordneten Gebäudewandung, wobei die Durchgangsöffnung (2) zumindest eine Laibung ausbildet und für die Durchführung zumindest einer Leitung (3) für Energie- und/oder Informationsleiter vorgesehen ist, mit einer die Leitung zumindest im Bereich der Durchgangsöffnung (2) ummantelnden, als Rohrschale aus Mineralfasem ausgebildeten Manschette (6),
**dadurch gekennzeichnet,**
**dass** die Manschette (6) unmittelbar an die Laibung (4) der als Bohrung ausgebildeten Durchgangsöffnung (2) anschließt und dass die Manschette (6) die Durchgangsöffnung (2) in radialer und axialer Richtung vollständig hitzeresistent und rauchdicht verschließt.

2. Abschottung nach Anspruch 1,
**dadurch gekennzeichnet,**
**dass** die Manschette (6) eine Rohdichte zwischen 20 und 600 kg/m³, insbesondere zwischen 20 und 200 kg/m³ aufweist.

3. Abschottung nach Anspruch 1,
**dadurch gekennzeichnet,**
**dass** die Manschette (6) form- und/oder reibschlüssig in der Durchgangsöffnung (2) gehalten ist.

4. Abschottung nach Anspruch 1,
**dadurch gekennzeichnet,**
**dass** die Manschette (6) einen gegenüber dem Durchmesser der Durchgangsöffnung (2) geringfügig größeren Außendurchmesser aufweist.

5. Abschottung nach Anspruch 1,
**dadurch gekennzeichnet,**
**dass** die Manschette (6) dichtend an der Leitung (3) anliegt.

6. Abschottung nach Anspruch 1,
**dadurch gekennzeichnet,**
**dass** die Leitung (3) beidseitig der Durchgangsöffnung (2) mit Rohrschalen (7) wärme- und/oder schallisoliert ist.

7. Abschottung nach Anspruch 6,
**dadurch gekennzeichnet,**
**dass** die Manschette (6) eine Länge aufweist, die mit der Länge der Durchgangsöffnung (2) übereinstimmt.

8. Abschottung nach Anspruch 6,
**dadurch gekennzeichnet,**
**dass** der Außendurchmesser der beidseitig der Durchgangsöffnung (2) angeordneten, die Leitung (3) isolierenden Rohrschalen (7) größer ist als der Außendurchmesser der Manschette (6).

9. Abschottung nach Anspruch 6,
**dadurch gekennzeichnet,**
**dass** die Rohrschalen (7) beidseitig der Manschette (6) von der Manschette (6) unterschiedliche Rohdichten aufweisen.

## Claims

1. Isolation for a passage opening (2) in a substantially vertically or horizontally oriented wall of a building, wherein said passage opening (2) defines at least one interior surface and is provided for the passage of at least one duct (3) for energy and/or information leads, comprising a collar (6) which is formed as a tube shell from mineral fibers that surrounds said duct at least within the region of said passage opening (2),
**characterized in**
**that** said collar (6) directly joins said interior surface (4) of said passage opening (2) which is formed as a bore, and that said collar (6) closes said passage opening (2) in the radial and axial directions in a completely heat-resistant and smoke-tight manner.

2. Isolation according to claim 1,
**characterized in**
**that** said collar (6) has a bulk density of between 20 and 600 kg/m³, particularly between 20 and 200 kg/m³.

3. Isolation according to claim 1,
**characterized in**
**that** said collar (6) is held in said passage opening in a form-fit fashion and/or by frictional engagement.

4. Isolation according to claim 1,
**characterized in**
**that** said collar (6) has an outer diameter which is slightly larger compared to the diameter of said passage opening (2).

5. Isolation according to claim 1,
**characterized in**
**that** said collar (6) sealingly fits against said duct (3).

6. Isolation according to claim 1,
**characterized in**
**that** said duct (3) is heat and/or sound-insulated on both sides of said passage opening (2) with tube shells (7).

7. Isolation according to claim 6,
**characterized in**
**that** said collar (6) has a length which corresponds to the length of said passage opening (2).

8. Isolation according to claim 6,
**characterized in**
**that** the outer diameter of the tube shells (7) arranged on both sides of said passage opening (2) and insulating said duct (3) is larger than the outer diameter of said collar (6).

9. Isolation according to claim 6,
**characterized in**
**that** said tube shells (7) on both sides of said collar (6) have bulk densities different from those of said collar (6).

## Revendications

1. Isolation pour une ouverture de passage (2) dans une paroi de bâtiment placée dans une orientation substantiellement verticale ou horizontale, l'ouverture de passage (2) formant au moins un intrados et étant prévue pour le passage d'au moins une conduite (3) pour des conducteurs d'énergie et/ou d'informations, avec une manchette (6), configurée comme un coffrage de tuyaux en fibres minérales, qui enveloppe la conduite au moins dans la zone de l'ouverture de passage (2),
**caractérisée en ce**
**que** la manchette (6) se rattache directement à l'intrados (4) de l'ouverture de passage (2) configurée comme un perçage et que la manchette (6) ferme l'ouverture de passage (2) dans le sens radial et axial en étant complètement résistante à la chaleur et étanche à la fumée.

2. Isolation selon la revendication 1,
**caractérisée en ce**
**que** la manchette (6) présente une masse volumique apparente entre 20 et 600 kg/m³, en particulier entre 20 et 200 kg/m³.

3. Isolation selon la revendication 1,
**caractérisée en ce**
**que** la manchette (6) est maintenue de manière crabotée et/ou par friction dans l'ouverture de passage (2).

4. Isolation selon la revendication 1,
**caractérisée en ce**
**que** la manchette (6) présente un diamètre extérieur légèrement supérieur au diamètre de l'ouverture de passage (2).

5. Isolation selon la revendication 1,
**caractérisée en ce**
**que** la manchette (6) adhère à la conduite (3) de manière à l'étouper.

6. Isolation selon la revendication 1,
**caractérisée en ce**
**que** la conduite (3) est isolée thermiquement et/ou acoustiquement des deux côtés de l'ouverture de passage (2) avec des coffrages de tuyau (7).

7. Isolation selon la revendication 6,
**caractérisée en ce**
**que** la manchette (6) présente une longueur qui coïncide avec la longueur de l'ouverture de passage (2).

8. Isolation selon la revendication 6,
**caractérisée en ce**
**que** le diamètre extérieur des coffrages de tuyau (7) qui isolent la conduite (3) qui sont placés des deux côtés de l'ouverture de passage (2) est supérieur au diamètre extérieur de la manchette (6).

9. Isolation selon la revendication 6,
**caractérisée en ce**
**que** les coffrages de tuyau (7) présentent des masses volumiques apparentes différentes de la manchette (6) des deux côtés de la manchette (6).
